# EUROPÄISCHE PATENTANMELDUNG

(11) **EP 1 128 113 A1**
(43) Veröffentlichungstag der Anmeldung: **29.08.2001**
(21) Anmeldenummer: 01101891.8
(22) Anmeldetag: 27.01.2001
(51) Int. Cl.: F16L 11/127, B65D 90/50

(54) **Leckageortung für mehrschichtige Rohre oder Behälter**

(30) Priorität: 21.02.2000 DE 10007822
(71) Anmelder: Egeplast Werner Strumann GmbH & Co., 48282 Emsdetten (DE)
(72) Erfinder: Hergenröther, Dirk, 63667 Nidda (DE); Kuchenbrod, Winfried, Dr., 65830 Kriftel (DE); Vogt, Richard, Dipl.-Geophys., 60385 Frankfurt am Main (DE); Werner, Joachim, Dr., 46499 Hamminkeln (DE)
(74) Vertreter: Habbel, Hans-Georg, Dipl.-Ing.

(57) **Zusammenfassung**

Die Erfindung bezieht sich auf die Wandung eines über der Erde eingesetzten Rohres, Formteiles, Behälters, einer Wanne oder Fläche, um Beschädigungen anzuzeigen, wobei in die beispielsweise aus Kunststoff bestehende Wandung zwei elektrisch leitende Metallschichten eingebettet sind, die durch eine elektrisch nicht leitende Schicht sowohl nach außen wie nach innen abgedeckt sind, und wobei weiterhin zwischen den beiden elektrisch leitenden Schichten, den sogenannten Signalschichten (2,4), eine elektrisch nicht leitende, also isolierende Schicht (5) vorgesehen wird.

## Beschreibung

Die Erfindung bezieht sich auf eine mehrschichtige Wand für Rohre od. dgl. gemäß dem Oberbegriff des Hauptanspruches.

Zur Prüfung der Dichtigkeit von Flüssigkeitsbehältern für Lebensmittel, deren Behälterwand aus einer Verbundfolie gebildet ist, in die eine Metallschicht eingebettet ist, war es bekannt, an oder in dem Behälter ein dünnes elektrisch leitfähiges Band, welches aus einem Polyolefin, nämlich Polyäthylen hoher Dichte oder Polypropylen oder dessen Copolymeren besteht, anzuordnen (FR-A 23 62 051). Die Metallschicht in der Verbundfolie wird dabei nicht zur Leckerkennung herangezogen.

Aus der DE 198 41 317 ist ein Leckortungssystem für eine dreischichtig und vollflächig aufgebaute Kunststoffwandung bekanntgeworden, in die eine metallisch, elektrisch leitende Schicht eingebunden ist, wobei eine unkomplizierte Ortung einer etwaig auftretenden Leckage angestrebt wird. Hierbei wirkt die in die Kunststoffwand eingebaute elektrisch leitfähige Schicht als eine Elektrode, die mit einer zweiten Elektrode zusammenarbeitet, wobei die zweite Elektrode in das die Wandung umgebende Material, beispielsweise das Erdreich einer Deponie od. dgl., eingesetzt ist.

Bei über der Erde verlegten Leitungen ist diese bekannte Anordnung nicht einsetzbar.

Der Erfindung liegt die Aufgabe zugrunde, eine Anzeigevorrichtung für mehrschichtige Wandungen zu schaffen, und zwar für über der Erde verlegte Wandungen, wie beispielsweise verlegte Rohre, Behälter od. dgl., durch die erreicht wird, daß trotz Beschädigung der Wandung von außen das Innere der Wandung dicht bleibt, also ein Austritt des im Inneren des Rohres oder des Behälters geführten Mediums nicht eintreten kann, trotzdem aber angezeigt wird, daß die Rohr- oder Behälterwand beschädigt ist.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, in die beispielsweise aus Kunststoff bestehende Wandung eines Rohres oder Behälters oder eines Formteiles zwei elektrisch leitende Schichten einzubetten, die durch eine elektrisch nicht leitende Schicht nach außen und innen abgedeckt sind, wobei zwischen den beiden elektrisch leitenden Schichten ebenfalls eine elektrisch nicht leitende, also isolierende Schicht vorgesehen wird.

Durch diesen erfindungsgemäßen Aufbau wird erreicht, daß selbst dann, wenn die innere Schicht noch unbeschädigt ist, d. h. das im Inneren des Rohres oder Behälters geführte Medium also noch nicht nach außen austreten kann, trotzdem aber darauf hingewiesen wird, daß die Außenschicht beispielsweise des Rohres oder des Behälters beschädigt ist, so daß nunmehr Maßnahmen unternommen werden können, um ein weiteres z. B. Einreißen der Wandung zu verhindern.

Hierbei können die Innenschicht und/oder die Außenschicht eine solche Ausbildung erhalten, daß sie die erforderliche Festigkeit und Tragfähigkeit des Rohres oder Behälters erbringen.

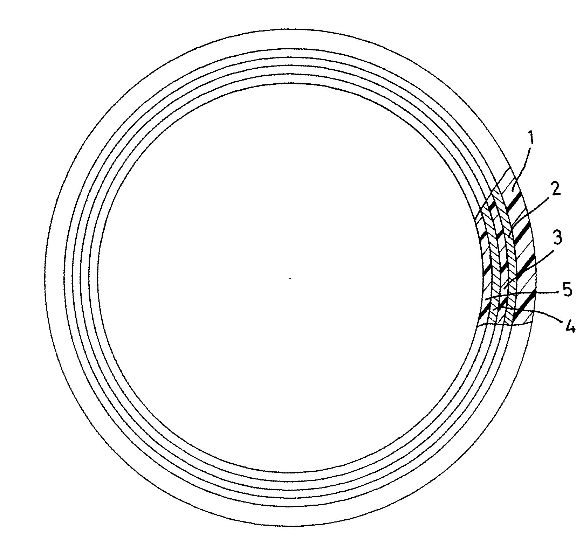

Ein Ausführungsbeispiel der Erfindung wird nachfolgend anhand der Zeichnung erläutert.

In der Zeichnung ist als Ausführungsbeispiel ein Rohr dargestellt, das eine Außenwandung 1 aus elektrisch nicht leitendem Werkstoff, z. B. Kunststoff aufweist. Nach innen hin gesehen schließt sich an diese Außenschicht 1 eine elektrisch leitende, vorzugsweise metallische Signalschicht 2 an, die nach innen hin durch eine elektrisch nicht leitende, also elektrisch isolierende Schicht abgedeckt ist, die sogenannte Mittelschicht 3, die beispielsweise ebenfalls aus Kunststoff oder einem ähnlichen Werkstoff bestehen kann. Auf die Mittelschicht 3 folgt eine elektrisch leitende Signalschicht 4, die zum Inneren des dargestellten Rohres durch eine elektrisch nicht leitende Innenschicht 5 abgedeckt wird, die in Anpassung an das im Rohr zu führende Medium entsprechend hinsichtlich der Materialwahl ausgebildet ist.

Die beiden Signalschichten 2 und 4 sind in einen Stromkreis eingebunden, der eine Stromquelle und einen Signalgeber aufweist, derart, daß bei Kontakt der Signalschicht 2 mit der Signalschicht 4 beispielsweise durch Verletzen der Außenschicht 1 eine elektrische Warnanzeige ausgelöst wird.

Wird also z. B. durch Beschädigung der Außenschicht 1 die Signalschicht 2 in Kontakt mit der Signalschicht 4 gebracht, so wird - in welcher Form auch immer - die Warnanzeige ausgelöst.

Hierbei kann wenigstens eine der Signalschichten 2 oder 4 aus einem fließfähigen, elektrisch leitfähigen Werkstoff bestehen.

Die Einrichtung gemäß dem dargestellten Ausführungsbeispiel hat den Vorteil, daß selbst dann, wenn die Innenschicht 5 noch unbeschädigt ist, also eine Absicherung des innerhalb des Rohres geführten Mediums vorhanden ist, ohne daß dieses nach außen austreten kann, trotzdem darauf hingewiesen wird, daß die Außenschicht 1 des Rohres beschädigt ist, beispielsweise durch Bauarbeiten oder durch sonstige Einflüsse. Nunmehr können Maßnahmen unternommen werden, um den Ort der Beschädigung festzustellen und es können die erforderlichen Reparaturarbeiten vorgenommen werden.

Es sei ausdrücklich darauf hingewiesen, daß die Erfindung nicht auf das dargestellte und beschriebene Ausführungsbeispiel beschränkt ist, sondern für alle aus Kunststoff bestehenden Körper, Platten, Formteile usw. eingesetzt werden kann. Auch sind die in der Zeichnung zum Verständnis der Erfindung gewählten Größenabmessungen übertrieben dargestellt, um den Aufbau der Wandung, des Rohres, der Platte oder des Körpers übersichtlich darzustellen.

Weiterhin sind die elektrischen Schalteinrichtungen, wie Leitungen, Stromquelle und Signalgeber, ebenfalls aus Übersichtlichkeitsgründen nicht dargestellt.

## Patentansprüche

1. Mehrschichtige Wand für Rohre, Formteile, Behälter, Wannen, Flächen od. dgl., wobei in die Wand eine elektrisch leitende Schicht eingebaut ist, die als erste Stromelektrode dient, die mit einer zweiten Stromelektrode einen Stromkreis mit einer Stromquelle bildet, dadurch gekennzeichnet, daß die Wand eine Innenschicht (5) aus elektrisch nicht leitendem Werkstoff, eine Außenschicht (1) aus elektrisch nicht leitendem Werkstoff und eine Mittelschicht (3) aus einem elektrisch isolierenden Werkstoff aufweist, wobei zwischen der Innenschicht (5) und der Mittelschicht (3) eine elektrisch leitfähige Signalschicht (4) und zwischen der Außenschicht (1) und der Mittelschicht (3) ebenfalls eine elektrisch leitfähige Signalschicht (2) angeordnet ist und die beiden Signalschichten (2, 4) an den Stromkreis mit einem Alarmgeber angeschlossen sind.

2. Mehrschichtige Wand nach Anspruch 1, dadurch gekennzeichnet, daß die Innenschicht (5) aus Kunststoff besteht.

3. Mehrschichtige Wand nach Anspruch 1 oder 2, dadurch gekennzeichnet, daß die Außenschicht (1) aus Kunststoff besteht.

4. Mehrschichtige Wand nach einem der vorhergehenden Ansprüche, dadurch gekennzeichnet, daß die Signalschichten (2, 4) aus Metall bestehen.

5. Mehrschichtige Wand nach einem oder mehreren der vorhergehenden Ansprüche, dadurch gekennzeichnet, daß wenigstens eine der elektrisch leitfähigen Signalschichten (2, 4) aus einem fließfähigen Werkstoff besteht.

6. Mehrschichtige Wand nach einem oder mehreren der vorhergehenden Ansprüche, dadurch gekennzeichnet, daß die Innenschicht (5) und/oder die Außenschicht (1) als tragende Schicht ausgebildet sind.
